(19) Europäisches Patentamt
European Patent Office
Office européen des brevets

(11) **EP 4 268 135 B1**

(12) **EUROPEAN PATENT SPECIFICATION**

(45) Date of publication and mention
of the grant of the patent:
**05.08.2026 Bulletin 2026/32**

(21) Application number: **22707627.0**

(22) Date of filing: **04.02.2022**

(51) International Patent Classification (IPC):
*G06N 3/084* (2023.01)   *G06N 3/006* (2023.01)
*G06N 3/0442* (2023.01)   *G06N 3/045* (2023.01)
*G06N 3/0464* (2023.01)   *G06N 3/048* (2023.01)
*G06N 3/092* (2023.01)   *G06N 3/098* (2023.01)

(52) Cooperative Patent Classification (CPC):
**G06N 3/084; G06N 3/006; G06N 3/0442;
G06N 3/045; G06N 3/0464; G06N 3/048;
G06N 3/092; G06N 3/098**

(86) International application number:
**PCT/EP2022/052793**

(87) International publication number:
**WO 2022/167626 (11.08.2022 Gazette 2022/32)**

(54) **CONTROLLING AGENTS USING STATE ASSOCIATIVE LEARNING FOR LONG-TERM CREDIT ASSIGNMENT**

STEUERUNG VON AGENTEN MIT ZUSTANDSASSOZIATIVEM LERNEN FÜR LANGZEITKREDITZUWEISUNG

AGENTS DE CONTRÔLE UTILISANT UN APPRENTISSAGE ASSOCIATIF D'ÉTAT POUR UNE ATTRIBUTION DU MÉRITE À LONG TERME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.02.2021 US 202163146182 P**

(43) Date of publication of application:
**01.11.2023 Bulletin 2023/44**

(73) Proprietor: **GDM Holding LLC
Mountain View, CA 94043 (US)**

(72) Inventors:
• **RITTER, Samuel
London N1C 4AG (GB)**
• **RAPOSO, David Nunes
London N1C 4AG (GB)**

(74) Representative: **Marks & Clerk GST
1 New York Street
Manchester M1 4HD (GB)**

(56) References cited:
**US-A1- 2020 175 364**

**Description**

BACKGROUND

This specification relates to reinforcement learning.

In a reinforcement learning system, an agent interacts with an environment by performing actions that are selected by the reinforcement learning system in response to receiving observations that characterize the current state of the environment. Some reinforcement learning systems select the action to be performed by the agent in response to receiving a given observation in accordance with an output of a neural network.

Neural networks are machine learning models that employ one or more layers of nonlinear units to predict an output for a received input. Some neural networks are deep neural networks that include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

US2020/175364 describes a reinforcement learning system in which a reward function network generates $\lambda$ return values for training the system. The $\lambda$ return values are differentiable and can thus be optimized by gradient descent.

SUMMARY

This specification generally describes a reinforcement learning neural network system, implemented as one or more computer programs on one or more computers in one or more locations, that trains a neural network to control an agent interacting with an environment. The system addresses a problem of how to evaluate the utility of an action in a sequence of actions, when a consequence of the action may not be experienced until after a long time delay, i.e. the problem of long-term credit assignment.

The invention is set out in claims 1 and 15; further aspects are set out in the dependent claims. Thus there is described a method of training a computer-implemented neural network system used to control an agent interacting with an environment to perform a task, in particular to facilitate long-term credit assignment. The computer-implemented neural network system includes a synthetic return neural network system and episodic memory.

The method comprises, at each of a plurality of time steps, obtaining an observation characterizing a current state of the environment, and processing the observation using the computer-implemented neural network system to generate an action selection output to select an action to be performed by the agent at the time step. The method causes the agent to perform the selected action, in response receiving an actual reward characterizing a progress made in the environment as a result of the agent performing the selected action. The method further involves storing a latent representation of the current state of the environment in the episodic memory at each time step.

The method trains the synthetic return neural network system, using the actual reward and the latent representations stored in the episodic memory, to provide a synthetic, expected future return. The synthetic reward is dependent on a learned association, between the latent representation dependent on the current state of the environment and one or more stored latent representations dependent on previous states of the environment, and the synthetic return neural network system is trained to learn this association. Thus the synthetic return neural network system may be trained to use the actual reward from the action performed while the agent is in the current state of the environment to learn to associate this current state with one or more stored latent representations dependent on previous states of the environment. The synthetic return may be considered an estimate of a reward that will be realized at some future time given the current state.

The method may also comprise processing the latent representation dependent on the current state of the environment using the synthetic return neural network system to generate a synthetic return for the current state of the environment. The system is then trained, in particular through reinforcement learning, using at least the synthetic return.

Particular embodiments of the subject matter described in this specification can be implemented so as to realize one or more of the following advantages.

Many complex tasks, e.g., robotic tasks, require that a particular action is performed at some point in time in order to benefit from a result of the action at some much later time. However the benefit of performing the particular action may not be apparent until the later time, and conventional reinforcement learning systems have difficulty learning tasks that involve long delays of this type. Conventional reinforcement learning systems can only assign "credit" to actions over relatively short time scales, and even systems that aim to address this problem can have difficult learning from rewards with long time delays.

The described system addresses the problem of long-term credit assignment by learning a model of reward contributions. The model learns to decompose the rewards into components, i.e. reward contributions or "synthetic returns", explainable by different past states. In particular the described system learns to associate states of the environment so that it can generate a synthetic reward for a current state where the corresponding actual reward will not be received until a much later state: The model learns to associate when being in a particular state of the environment is predictive of a reward in a later state, even when the later state, and reward, is in the distant future e.g. beyond the end of a TD learning "unroll". This allows the agent to learn to take actions the benefit of which will not be received until much later.

This in turn allows the system to learn to control an agent to perform tasks that conventional reinforcement learning systems may find difficult or impossible to learn. Correspondingly this allows the system to learn some tasks using less computational resources than might otherwise be needed. The learned associations also allow the agent to assign credit directly from the later state to the earlier state, skipping over time steps that may include distracting events, in particular rewards unrelated to the task being learned that could otherwise contribute variance to computed long-term returns. Further, the system does not need access to future states to generate the synthetic return, because of the way that the synthetic return is generated.

As conventional reinforcement learning can be used to select actions that maximize the synthetic returns the described techniques can be used to enhance a wide range of existing reinforcement learning algorithms. The synthetic return can be used as well as or instead of the usual reward, without much extra computational burden.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 shows an example of a reinforcement learning system.
FIG. 2 shows an example distributed implementation of the reinforcement learning system.
FIG. 3 shows an example of the processing performed by the reinforcement learning system.
FIG. 4 is a flow diagram of an example process for training a reinforcement learning system.
FIGS 5A-C illustrate operation of an example of the reinforcement learning system.

Like reference numbers and designations in the various drawings indicate like elements.

DETAILED DESCRIPTION

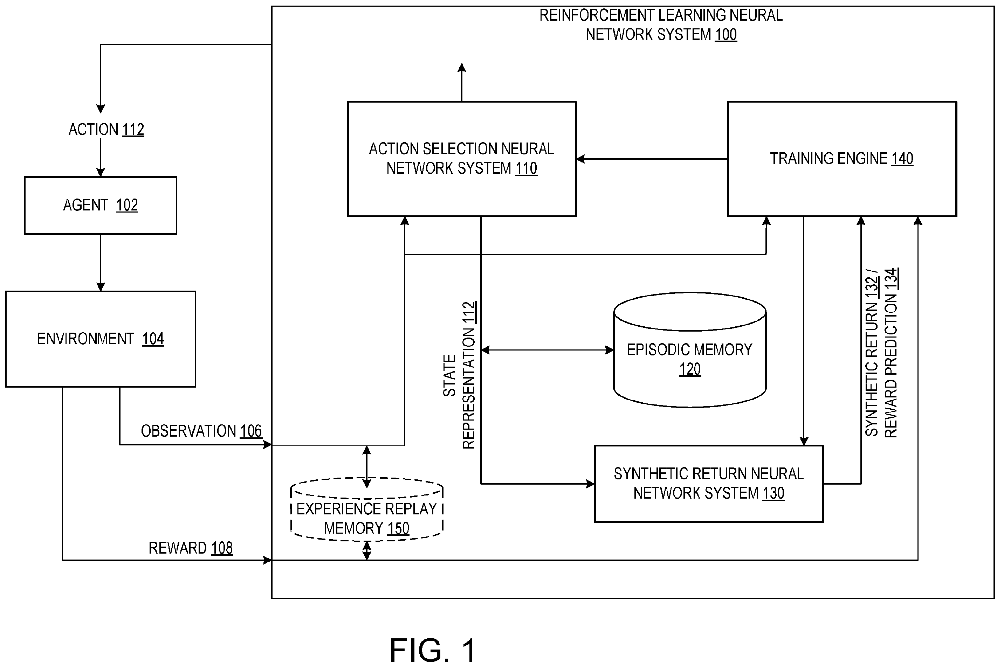

FIG. 1 shows an example of a reinforcement learning neural network system 100 that may be implemented as one or more computer programs on one or more computers in one or more locations. The reinforcement learning neural network system 100 is used to control an agent 102 interacting with an environment 104 to perform one or more tasks, using reinforcement learning techniques.

The reinforcement learning neural network system 100 has one or more inputs to receive data from the environment characterizing a state of the environment, e.g. data from one or more sensors of the environment. Data characterizing a state of the environment is referred to herein as an observation 106.

The data from the environment can also include task rewards. Generally a task reward 108 is represented by a scalar numeric value characterizing progress of the agent towards the task goal and can be based on any event in, or aspect of, the environment. Such rewards are referred to herein as "actual rewards". Actual rewards may be received as a task progresses or only at the end of a task, e.g. to indicate successful completion of the task.

In general the reinforcement learning neural network system 100 controls the agent by, at each of multiple action selection time steps, processing the observation to select an action 112 to be performed by the agent. At each time step, the state of the environment at the time step depends on the state of the environment at the previous time step and the action performed by the agent at the previous time step. Performance of the selected actions 112 by the agent 102 generally causes the environment 104 to transition into new states. By repeatedly causing the agent 102 to act in the environment 104, the system 100 can control the agent 102 to complete a specified task.

The reinforcement learning neural network system 100 learns to control the agent to perform a task using the observations 106 and rewards 108. However in conventional systems learning can be slow or may fail when there is a long delay between performing a particular action and receiving a reward that depends on the particular action, especially when other, distracting rewards intervene. For example to open a door an agent may at some earlier point need to have picked up a key; or multiple subtasks may need to have been successfully completed before a reward for a task dependent upon these is received.

As described in more detail later, the reinforcement learning neural network system 100 addresses these difficulties by learning a model of which past states of the environment are predictive of future rewards, in particular learning associations between pairs of states where the earlier state is predictive of reward in the later state. The system uses a buffer of state representations, e.g. one for each state so far in an episode during which the system attempts to perform the task, herein termed an "episodic memory", to learn a function that estimates the reward that each state predicts for some arbitrary future state, i.e. a synthetic return. Thus the model learns to decompose rewards into components that can be explained by different past states.

The model is used in a forward-looking manner to reinforce actions that lead to future reward, in particular by applying the learned function to reinforce actions that lead to future reward. In implementations this is done by applying the learned function to the current state (observation), then using the function's output as an auxiliary reward signal. Thus the technique can be used with a wide range of different reinforcement learning algorithms to improve their performance as the auxiliary reward signal can be used to augment or replace the reward signal in a conventional algorithm. As one example, the technique can be used with a temporal difference (TD) based reinforcement learning algorithm. However there is no need for both pairs of states to occur within the same "unroll" (a group of time steps during which TD learning propagates credit backward, time-step-by-time-step) or even, in principle, within the same episode. Thus the described system can be used to predict future value of an action even over very long timescales.

In more detail, the reinforcement learning neural network system 100 includes an action selection neural network system 110, a training engine 140, episodic memory 120, and a synthetic return neural network system 130. In some implementations the system may also include experience replay memory 150. In some implementations the synthetic return neural network system 130 is used to select actions and there is no separate action selection neural network system 110.

In implementations of the system the action selection neural network system 110 comprises one or more neural networks that are configured to process an input that includes an observation 106 characterizing the current state of the environment 104, in accordance with parameters of the action selection neural network system, to generate an action selection output for selecting the action 112. In operation the agent is caused to perform the selected action and, in response, receives an actual reward (that may be zero) characterizing a progress made in the environment as a result of the agent performing the selected action.

As one example, the action selection output may comprise action selection scores according to which the action is selected. For example the action selection scores may define a probability distribution over possible actions to be performed by the agent, such as a probability for each action in a set of possible actions that can be performed by the agent to interact with the environment. In another example the action selection output may determine the action directly, e.g. by identifying a value for the action such as a speed or torque for a mechanical action. In another example the action selection output may parameterize a distribution over possible actions, such as a Gaussian distribution, according to which the action may be selected e.g. stochastically, by sampling from the distribution or by selecting a highest probability action. In another example the action selection output may define a Q-value (state-action value) or Q-value distribution for each actions of a possible set of actions, according to which an action is selected. In general the actions may be discrete or continuous. In some cases the action may be selected in accordance with an exploration policy, e.g. it may have noise added or there may be a small probability of the action being selected randomly.

The episodic memory 120 is configured to store, at each time step, a latent representation dependent on (derived from) the current state of the environment i.e. dependent on a current observation 106. In implementations, but not necessarily, the latent representation comprises a state representation 112 that is a representation of a state of the action selection neural network system 110. In general the latent representation is a representation in a pre-determined latent space. Typically, but not necessarily, it has a lower dimensionality than the observation 106. The stored data, i.e. state representations 112, are retrievable by the synthetic return neural network system 130.

In some implementations the reinforcement learning neural network system 100 comprises one or more encoder neural networks to encode the observation of the environment, e.g. from one or more sensors, for the action selection neural network system 100, and the state representation 112 may be generated from the encoding(s). For example where the observation 106 includes an image the action selection neural network system 110 may include one or more convolutional neural network layers and the latent representation i.e. state representation 112 may be generated by these layers.

In another example the action selection neural network system 110 may include a recurrent neural network, i.e. a neural network with a recurrent layer such as an LSTM layer. Then the latent representation may be generated by the recurrent layer e.g. it may be determined from a hidden state of the recurrent neural network at a current time step, such as a recurrent state or cell state of the recurrent neural network. Thus the latent representation may encode the recent past as well as the current state of the environment. Where the latent representation comprises a representation of a state of the action selection neural network system 110 it may be viewed as a "belief state" i.e. as encoding some information about the system's "belief" about the utility of the state of the environment.

In some implementations the latent representation is a latent representation of a state of the environment e.g. i.e. derived directly from an observation 106 rather than from an internal state of the action selection neural network system 110. In some implementations the latent representation of a state of the environment includes a latent representation of the action performed in that state of the environment. In principle the stored latent representations could be shaped by the synthetic return or actual reward.

The episodic memory may be described as an external memory in the sense that it is separate to the action selection neural network system 110. In implementations the episodic memory is slot-based but this is not essential and it may, e.g., be implemented using a distributed approach such as a Kanerva Machine (arXiv:1906.09237v2). When organized as a set of "slots" each slot may be configured to store a respective latent representation.

The episodic memory may, but need not, store a respective latent representation at each time step. Thus the episodic memory 120 may store one state representation 112 for each state so far in a current episode. When full old time slots may be overwritten or the memory may be cleared at intervals. The memory may be implemented, e.g., as a logical data storage area or a physical data storage device.

An episode is generally a period during which the agent attempts to perform the specified task. It may be defined by a particular number or threshold number of time steps, or may continue until some other termination criterion has been satisfied, e.g. until a reward, i.e. an actual reward, is received indicating that the task has successfully been performed.

The synthetic return neural network system 130 is configured to provide a synthetic return 132 for use by the training engine 140 during training of the action selection neural network system 110. More specifically, the synthetic return neural network system 130 is configured to process the latent representation for the current state of the environment to generate the synthetic return for the current state of the environment.

The synthetic return may be considered an estimate of a reward, more specifically of a contribution to a reward, that will be realized at some future time given the current state, i.e. an expected future return given the current observation 106. That is, the synthetic return is a synthetic reward.

In implementations the synthetic return is dependent upon a (learned) association between the latent representation for the current state of the environment and one or more stored latent representations for previous states of the environment. The association is a reward-predictive association. It relates an actual reward received at the current state to having been in the one or more previous states. More specifically it predicts the amount of reward that the one or more earlier states contribute to the actual reward received at the later state.

The synthetic return neural network system 130 is trained to learn this association by the training engine 140. More particularly the synthetic return neural network system is trained to use the actual reward from the action performed while the agent is in the current state of the environment, to learn to associate this current state with one or more stored latent representations dependent on previous states of the environment. Thus the training engine 140 trains the synthetic return neural network system 130 using the actual reward and the latent representations stored in the episodic memory, to provide the synthetic return. The synthetic return neural network system 130 is configured to provide a reward prediction 134, for use by the training engine 140 during this training as described further later.

The synthetic return neural network system 130 is trained to associate pairs of states where occupancy of the earlier state is predictive of the later state's reward, in a backward-looking manner, using reward prediction 134. However these associations are used in a forward-looking manner, to reinforce actions that lead to future reward. Thus synthetic return neural network system 130 is used to generate the synthetic return 132 based on a single state, i.e. based on just the current state.

The synthetic return for the current state of the environment is used by the training engine 140 to train the reinforcement learning neural network system, more particularly the action selection neural network system 110. The action selection neural network system 110 may be trained using only the synthetic return, or it may be trained using an augmented reward that is a weighted combination of the actual reward and the synthetic return.

The reinforcement learning neural network system 100 may be trained using any appropriate on-policy or off-policy reinforcement learning technique, e.g., a temporal difference (TD) technique or an actor-critic reinforcement learning technique e.g. using a policy gradient update.

For example, the system may be trained with a TD loss (error) dependent on a difference between a state or state-action value output of the action selection neural network system 110, and an estimated return dependent upon at least the synthetic return, e.g. dependent upon the augmented (combined) reward. Depending upon the implementation the state-action value output may be the action selection output. In another example the action selection neural network system 110 provides a state value output in addition to the action selection output, and the TD loss depends on a difference between the state value output for the current time step and an estimated return dependent upon the synthetic return or augmented reward. A reinforcement learning objective for the action selection output may then depend on the state value output.

The action selection neural network system 110 is trained using the synthetic returns, and optionally also the actual rewards, by backpropagating gradients of a reinforcement learning objective function e.g. dependent upon the TD loss and/or a policy gradient, to adjust the parameters of the action selection neural network system. The synthetic returns or augmented rewards are used by the reinforcement learning technique in place of conventional rewards.

Where an off-policy reinforcement learning technique is used the system may include the experience replay memory 150 may be used to store observations 106 and actual rewards 108 generated by the agent interacting with the environment, for use by the training engine 140. When training using stored experience data the synthetic return for the current state of the environment may be that defined by a current training time step i.e. by a time step of the experience data retrieved from the experience replay memory 150.

Merely as one example, the agent may be a mechanical, e.g. robotic, agent interacting with a real-world environment e.g. by moving within the environment or physically manipulating an object in the environment. Then the observation 106 may include observations of the position or state of motion of the agent or of joints or other parts of the agent, and/or observations about the position or state of motion of one or more objects in the environment, e.g. as one or more images or as sensor data. The reinforcement learning neural network system 100 provides a control signal output to control the agent to perform a mechanical action e.g. to move the agent or part of the agent. An actual reward may represent completion or progress towards completion of a learned task. After the action is performed a next observation characterizes a subsequent state of the environment, i.e. an effect of the action.

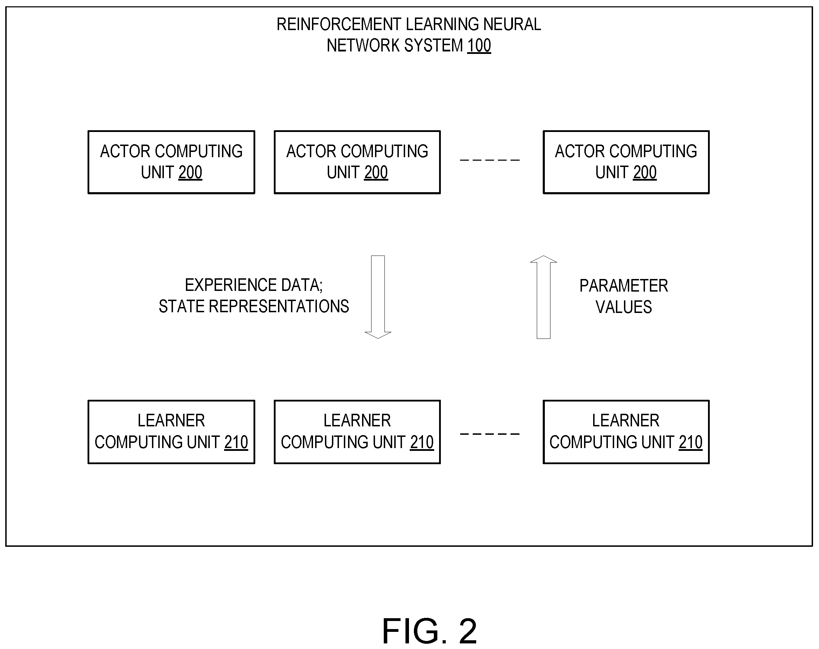

FIG. 2 shows an example of a distributed implementation of the reinforcement learning neural network system 100 of FIG. 1, with multiple actor computing units 200 and one or more learner computing units 210. Such an implementation may be used with a distributed reinforcement learning technique such as IMPALA, arXiv:1802.01561, Espeholt, et al. (an advantage actor-critic technique).

The actor computing units 200 generate experience data (observations, actions, and actual rewards) that is provided to the learner computing unit(s) 210, which use this to determine updates to parameters of the action selection neural network system 110. The actor computing units 200 periodically obtain the most recent values of these parameters for controlling multiple agents 102 to perform the actions. In this example the actor computing units 200 also report state representations 112 stored in an episodic memory, which are used by the learner computing unit(s) for learning to generate the synthetic returns.

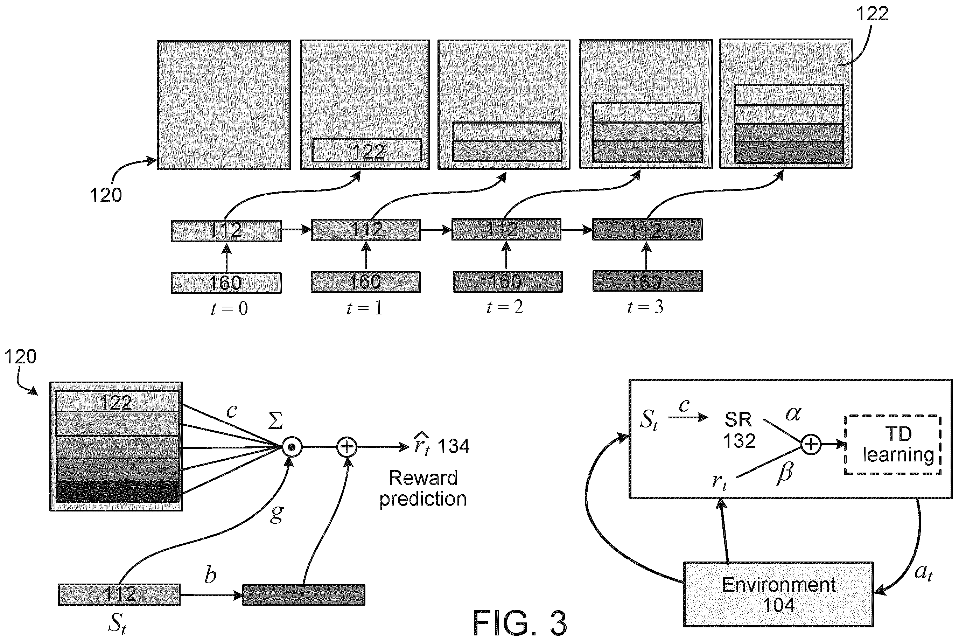

FIG. 3 illustrates the operation of one example implementation of the reinforcement learning neural network system 100 of FIG. 1.

In the example of FIG. 3 the synthetic return neural network system 130 is implemented by a combination of a contribution neural network, $c(\cdot)$, and a trainable gating function $g(\cdot)$, that may be implemented by a gate neural network.

The contribution neural network, $c(\cdot)$, is configured to process a latent representation dependent on a state of the environment, $s_k$, according to contribution neural network parameters, to generate a reward contribution, $c(s_k)$. When the synthetic return neural network system 130 is trained $s_k$ comprises a state representation 112 retrieved from the episodic memory 130. When the synthetic return neural network system 130 is used to generate the synthetic return 132 $s_k$ comprises a state representation 112 of the current state $s_t$. Merely as an example, the contribution neural network may comprise a multilayer perceptron (MLP).

The trainable gating function $g(\cdot)$, e.g. the gate neural network, is configured to process a latent representation dependent on the current state of the environment, $s_t$, e.g. according to gate neural network parameters, to generate a weight, $g(s_t)$, for weighting the reward contribution from the contribution neural network. The weight may comprise a scalar value e.g. in the range [0,1], e.g. defined by a sigmoid function. The latent representation dependent on the current state of the environment may be the current state representation 112. Merely as an example, the gate neural neural network may comprise a multilayer perceptron (MLP).

In some implementations the gate neural network, is configured to process a latent representation dependent on the current state of the environment, $s_t$, and one of the stored latent representations, $s_k$, dependent on a previous state of the environment, to generate the weight. Then the trainable gating function may be represented as $g(s_t, s_k)$, where $s_k$ denotes an observation characterizing a state of the environment at time k.

As described further below the gating function is not used when the synthetic return neural network system 130 is used to generate the synthetic return 132.

In implementations the reward contribution from the contribution neural network, $c(\cdot)$, is determined from the latent representation of only one state, without needing a latent representation of an associated state, and provides the synthetic return 132. Then, when training the action selection neural network system 110 the synthetic return can be determined at the time a current state is realized in the environment. Factorizing the learned association in this way facilitates integrating the synthetic return into a conventional reinforcement learning system with little modification. Alternatively the contribution neural network and the gate neural network may be combined into a single neural network dependent on two states, $c(s_t, s_k)$, and the synthetic return for training the action selection neural network system 110 may then be determined in hindsight e.g. at the end of an episode.

In some environments, e.g. where an action in a state can lead to the absence of a negative reward later, it can be useful for the synthetic return neural network system 130 also to include a baseline contribution neural network, $b(\cdot)$. The baseline contribution neural network, $b(\cdot)$, is configured to process a latent representation dependent on a current state of the environment, $s_t$, e.g. according to baseline contribution neural network parameters, to generate a baseline reward contribution, $b(s_t)$. This may be considered a bias term for state $s_t$. The baseline contribution neural network may e.g. comprise an MLP; it may have the same architecture as the contribution neural network but different parameter values.

During training of the synthetic return neural network system 130 the baseline contribution neural network may be used to process the current state instead of the contribution neural network, i.e. using $b(s_t)$ instead of $c(s_t)$. This can encourage the model to prefer to use the current state to predict the current reward. The reward contribution, $c(s_k)$, may then be interpreted as an advantage provided by a state to a future state, where the advantage may be positive or negative.

As illustrated in FIG. 3, the synthetic return neural network system 130 may be trained based on the reward

prediction 134, $\widehat{r}_t$, for a time step, $t$. The system may be trained at the time step, t, using each of a plurality of latent representations dependent on previous states of the environment i.e. the latent representations from previous time steps. These may be retrieved from in the episodic memory, where they have previously been stored.

The synthetic return neural network system 130 may be trained based on a difference between the reward prediction (estimated reward) 134 for the current time step $\widehat{r}_t$ and an actual reward for the time step, $r_t$. This may involve backpropagating gradients of an objective function dependent upon the difference to adjust parameters of the contribution neural network, of the gating function, and of the baseline contribution neural network where present.

Generating the reward prediction (estimated reward) 134 may comprise processing the state representation 112, $s_k$, for each of the previous time steps stored in the episodic memory 120 to generate a reward contribution, $c(s_k)$, for each of time step. The reward contributions are then summed and multiplied by the weight, $g(s_t)$, from the trainable gating function, which is determined from the state representation 112, $s_t$, for the current state of the environment to provide the reward prediction $\widehat{r}_t$, e.g. as $\widehat{r}_t = g(s_t) \sum_{k=0}^{t} c(s_k)$. Optionally the state representation 112, $s_t$ is also processed by the baseline contribution neural network to generate the baseline reward contribution, $b(s_t)$, which is added to the weighted sum, e.g. as $\widehat{r}_t = g(s_t) \sum_{k=0}^{t-1} c(s_k) + b(s_t)$.

As a particular example, the synthetic return neural network system 130 may be trained based on a loss

$$\mathcal{L} = \left\| r_t - g(s_t) \sum_{k=0}^{t-1} c(s_k) - b(s_t) \right\|^2$$

In some other implementations the trainable gating function may depend on the latent representation for the current state of the environment and the stored latent representation for a previous state of the environment, e.g. as $g(s_k, s_t)$. Then the objective function $\mathcal{L}$ may depend on $r_t - \sum_{k=0}^{t} g(s_k, s_t) c(s_k)$, or on $r_t - \left[ \sum_{k=0}^{t-1} g(s_k, s_t) c(s_k) + b(s_t) \right]$.

In the example of FIG. 3 the reinforcement learning neural network system 100 is trained using temporal difference learning. The state representation 112 for the current state of the environment, $s_t$, is processed by the contribution neural network to generate the reward contribution, $c(s_t)$, that is the synthetic return 132. This is added to the actual reward, $r_t$, to generate a combined, augmented reward that is used in place of a conventional reward for the TD learning.

As a particular example the combined reward, $\tilde{r}_t$, may be determined as

$$\tilde{r}_t = \alpha c(s_t) + \beta r_t$$

where $\alpha$ and $\beta$ are hyperparameters. In a TD context where a TD learning target depends upon a sum of time-discounted actual rewards, these hyperparameters trade off between two different learning objectives, the predicted reward at an arbitrary future state and the time-discounted total of future reward. Whilst temporal recency can be a useful heuristic for assigning credit, in some implementations and environments it can be useful if $\beta = 0$.

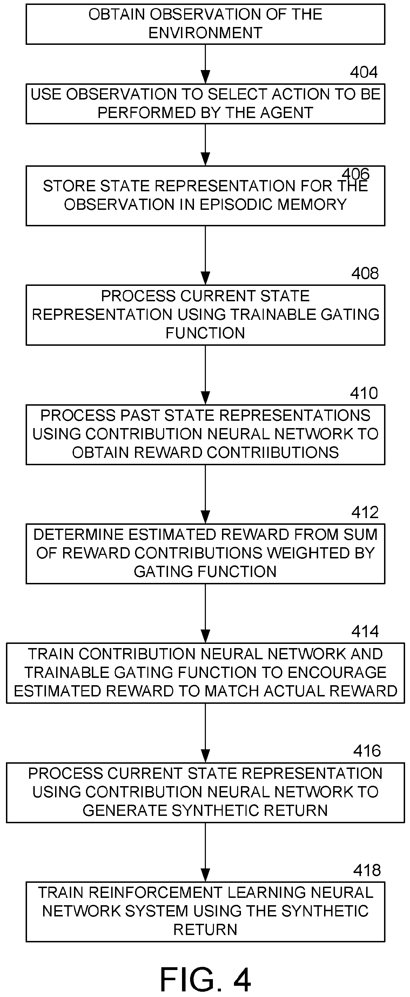

FIG. 4 is a flow diagram of an example process for training a system of one or more computers located in one or more locations, such as the reinforcement learning neural network system 100.

For each of a series of time steps the process involves obtaining an observation for a current time step characterizing a current state of the environment (step 402), processing the observation for the current time step using the value function neural network to select an action to be performed by the agent in response to the observation (404), and causing the agent to perform the selected action. The state representation 112 derived from the observation 106 is stored in a slot 122 of the episodic memory 120 (step 406). In response the system receives an actual reward for the current time step (which may be zero), the reward characterizing progress made in the environment as a result of the agent performing the selected action and the environment transitions to a next state of the environment.

The process also involves training the reinforcement learning neural network system 100, in particular the action selection neural network system 110, and the synthetic return neural network system 130. These may be trained jointly, e.g. at each time step, or separately e.g. partially training one then the other.

Training the synthetic return neural network system 130 may comprise providing the latent representation $s_t$, i.e. the state representation 112, for the current state of the environment, to the trainable gating function to determine the

weight, $g(s_t)$ (step 408). The weight may be considered as a weight for the previous states of the environment. The weight represents an association between the current state of the environment and the previous state(s) of the environment i.e. it represents a measure of whether being in a previous state is predictive of the current actual reward. In implementations the weight, $g(s_t)$, is determined for each of the previous states of the environment stored in the episodic memory 120. However it needs to be calculated just once for each of the previous states as the same weight is used for each of the earlier states. The reward contribution, $c(s_k)$, may be interpreted as how much of the current actual reward is contributed by earlier state $s_k$. Although in principle the combination of $g(\cdot)$ and $c(\cdot)$ provides an extra degree of freedom, in practice the system generally learns a factorization in which $g(s_t)$ learns whether past states are predictive of a reward at $s_t$ and $c(s_k)$ estimates how much reward is contributed.

The training may further comprise providing each of a plurality of the stored latent representations dependent on a previous state of the environment to the contribution neural network. These are the latent representations from previous time steps stored in the episodic memory 120. These are processed by the contribution neural network to generate a reward contribution to the current actual reward from the stored latent representation dependent on each previous state of the environment (step 410).

The reward contributions are then summed, each weighted by the respective weight from the trainable gating function, to determine the estimated reward, i.e. reward prediction 134 (step 412). The reward contributions may be summed then weighted (by $g(s_t)$) or weighted then summed. Optionally the latent representation for the current state of the environment is processed using the baseline contribution neural network to generate the baseline reward contribution, and summing the reward contributions includes summing the baseline reward contribution.

The contribution neural network and the trainable gating function are then trained, e.g. jointly, to encourage the estimated reward to match the actual reward (step 414). For example they may be trained using an objective function, e.g. loss, dependent upon difference between the estimated reward and the actual reward e.g. by backpropagating gradients of the objective function.

To generate the synthetic return for the current state the latent representation dependent on the current state of the environment, i.e. the current state representation 112, is processed by the contribution neural network to generate the reward contribution, and hence the synthetic return 132, for the current state of the environment (step 416). Here the gating function need not be used. In implementations, generating the reward contribution for the current state of the environment is performed independently of knowledge of a future state of the environment after the current state.

The synthetic return 132 may be the reward contribution or may be derived from the reward contribution. Optionally a combined reward, comprising a weighted combination of the actual reward and the synthetic return, is determined as described above.

Training the reinforcement learning neural network system 100, in particular the action selection neural network system 110, may comprise determining the synthetic return or combined reward, and then using any reinforcement learning technique to train the system based on the synthetic return or combined reward (step 418). The action selection neural network system may be trained by adjusting values of parameters of the action selection neural network system based on the synthetic return or combined reward, using gradients of a reinforcement learning loss e.g. by backpropagation. The reinforcement learning loss may be any suitable loss e.g. a temporal difference loss or a policy gradient loss, dependent upon the synthetic return or combined reward.

The steps of FIG. 4 can be performed in a different order, and some steps may be repeated before others are performed. For example the synthetic return neural network system may be trained at different intervals to the action selection neural selection system 110.

Where the baseline contribution neural network is used, in some implementations the training of the synthetic return neural network system 130, and the loss, may be separated into two parts:

$$\|r_t - b(s_t)\|^2$$

$$\mathcal{L} = \left\| r_t - \text{stopgrad}\big(b(s_t)\big) - \sum_{k=0}^{t-1} g(s_t) c(s_k) \right\|^2$$

where stopgrad($\cdot$) indicates that a gradient of the loss, $\mathcal{L}$, should not be backpropagated into the contribution neural network during training of the synthetic return neural network system 130. This approach forces the baseline reward contribution to predict as much variance as possible, and the reward contribution to be an advantage.

In a variant of the above described training process the trainable gating function mau be omitted so that the reward contribution is dependent on the latent representation for the current state of the environment and one of the stored latent representations for a previous state of the environment, $c(s_k, s_t)$. Then determination of the loss, and training on the loss, may proceed stepwise:

$$r_t \leftarrow c(s_0, s_t)$$

$$r_t - c(s_0, s_t) \leftarrow c(s_1, s_t)$$

$$r_t - \big( c(s_0, s_t) + c(s_1, s_t) \big) \leftarrow c(s_2, s_t)$$

$$r_t - \sum_{k=0}^{t-1} c(s_k, s_t) \leftarrow c(s_t, s_t)$$

This can enforce that reward contributions are not double-counted.

As previously mentioned, in some implementations of the reinforcement learning neural network system 100 the synthetic return neural network system 130 is used to select actions and there is no separate action selection neural network system 110. For example in such implementations the synthetic return neural network system, in particular the contribution neural network, may be further configured to generate a synthetic return for actions of a set of possible actions in the current state of the environment. In such implementations the state representation 112 may be a state-action representation, and the stored a latent representation of a state of the environment may include a latent representation of the action performed in the state of the environment. Generating the synthetic return for the current state of the environment may then further comprise generating the synthetic return for each of the possible actions in the current state of the environment, yielding state-action utility estimates, $U(s_t, a_t)$.

An action may be selected using the state-action utility estimate, e.g. by selecting an action with the maximum utility estimate or by mapping the utility estimates to probabilities and sampling an action in accordance with the probabilities. The action selection may be subject to an exploration policy such as an $\varepsilon$-greedy exploration policy, where the system 100 selects the action to be performed by the agent in accordance with probability $1-\varepsilon$, and randomly selects the action with probability $\varepsilon$ (where $\varepsilon$ is a scalar value between 0 and 1). The state-action utility estimate may be considered a Q-value, and the synthetic return neural network system 130 may be trained to generate the utility estimates using any Q-learning reinforcement learning technique.

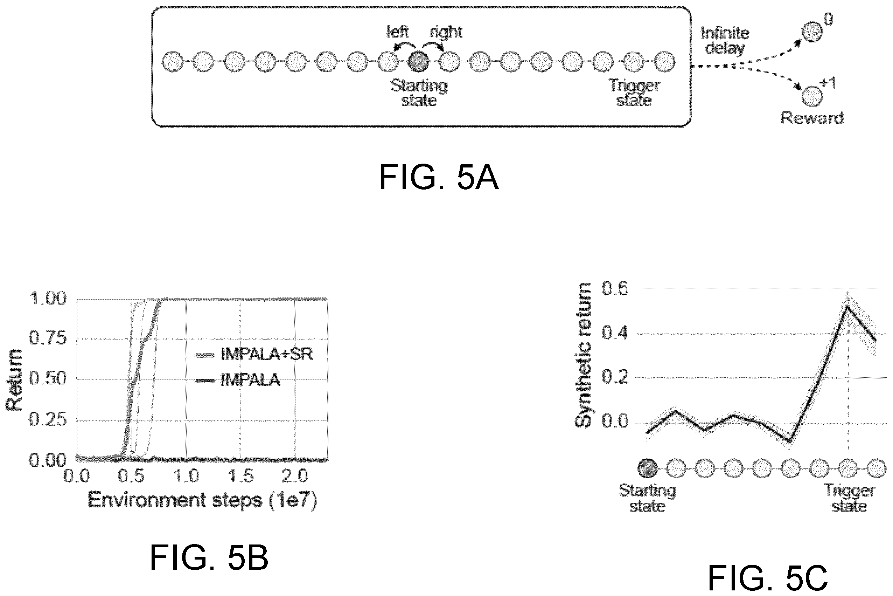

FIGS 5A-C illustrate how an example of the reinforcement learning system 100, here using implement IMPALA *(ibid),* learns to perform a toy task. The task is a "chain task" as illustrated in FIG. 5A: Starting from the center of a chain the agent navigates the chain by choosing "left" or "right" actions. After a fixed number of steps (10) the agent will transition to a state that gives a reward of +1, but only if the agent previously visited a specific "trigger state", otherwise the reward is zero. An infinite delay in simulated during the transition to the rewarding or non-rewarding state, by setting the TD discount factor to zero for the step corresponding to this transition. FIG. 5B shows examples of the return for IMPALA with (upper curves) and without (lower curve) a synthetic return as described above. It can been seen that only the system with the synthetic return learns to perform the task. An example of the synthetic return is shown in FIG. 5C; it can be seen that this spikes when the trigger state is reached, as this is indicative of a future reward. Thus the agent is incentivized to visit the trigger state.

Some further applications of the reinforcement learning neural network system 100 are described below.

In some implementations, the environment is a real-world environment, the agent is a mechanical agent interacting with the real-world environment, e.g., a robot or an autonomous or semi-autonomous land, air, or sea vehicle operating in or navigating through the environment, and the actions are actions taken by the mechanical agent in the real-world environment to perform the task. For example, the agent may be a robot interacting with the environment to accomplish a specific task, e.g., to locate an object of interest in the environment or to move an object of interest to a specified location in the environment or to navigate to a specified destination in the environment.

In these implementations, the observations may include, e.g., one or more of: images, object position data, and sensor data to capture observations as the agent interacts with the environment, for example sensor data from an image, distance, or position sensor or from an actuator.

For example in the case of a robot, the observations may include data characterizing the current state of the robot, e.g., one or more of: joint position, joint velocity, joint force, torque or acceleration, e.g., gravity-compensated torque feedback, and global or relative pose of an item held by the robot.

In the case of a robot or other mechanical agent or vehicle the observations may similarly include one or more of the position, linear or angular velocity, force, torque or acceleration, and global or relative pose of one or more parts of the agent. The observations may be defined in 1, 2 or 3 dimensions, and may be absolute and/or relative observations.

The observations may also include, for example, sensed electronic signals such as motor current or a temperature signal; and/or image or video data for example from a camera or a LIDAR sensor, e.g., data from sensors of the agent or data from sensors that are located separately from the agent in the environment.

In these implementations, the actions may be control inputs to control the robot, e.g., torques for the joints of the robot or higher-level control commands, or the autonomous or semi-autonomous land, air, sea vehicle, e.g., torques to the control surface or other control elements e.g. steering control elements of the vehicle, or higher-level control commands.

In other words, the actions can include for example, position, velocity, or force/torque/acceleration data for one or more joints of a robot or parts of another mechanical agent. Action data may additionally or alternatively include electronic control data such as motor control data, or more generally data for controlling one or more electronic devices within the environment the control of which has an effect on the observed state of the environment. For example in the case of an autonomous or semi-autonomous land or air or sea vehicle the actions may include actions to control navigation e.g. steering, and movement e.g., braking and/or acceleration of the vehicle.

In some implementations the environment is a simulation of the above described real-world environment, and the agent is implemented as one or more computers interacting with the simulated environment. For example the simulated environment may be a simulation of a robot or vehicle and the reinforcement learning system may be trained on the simulation and then, once trained, used in the real-world.

In the case of an electronic agent the observations may include data from one or more sensors monitoring part of a plant or service facility such as current, voltage, power, temperature and other sensors and/or electronic signals representing the functioning of electronic and/or mechanical items of equipment. For example the real-world environment may be a manufacturing plant or service facility, the observations may relate to operation of the plant or facility, for example to resource usage such as power consumption, and the agent may control actions or operations in the plant/facility, for example to reduce resource usage. In some other implementations the real-world environment may be a renewal energy plant, the observations may relate to operation of the plant, for example to maximize present or future planned electrical power generation, and the agent may control actions or operations in the plant to achieve this.

In some other applications the agent may control actions in a real-world environment including items of equipment, for example in a data center, in a power/water distribution system, or in a manufacturing plant or service facility. The observations may then relate to operation of the plant or facility. For example the observations may include observations of power or water usage by equipment, or observations of power generation or distribution control, or observations of usage of a resource or of waste production. The actions may include actions controlling or imposing operating conditions on items of equipment of the plant/facility, and/or actions that result in changes to settings in the operation of the plant/facility e.g. to adjust or turn on/off components of the plant/facility.

In another application, the agent may provide actions to control a renewable power generation system such as a wind or solar farm, e.g. based on predicted wind or solar irradiance, to increase the efficiency of operation of the system.

As another example, the environment may be a chemical synthesis or protein folding environment such that each state is a respective state of a protein chain or of one or more intermediates or precursor chemicals and the agent is a computer system for determining how to fold the protein chain or synthesize the chemical. In this example, the actions are possible folding actions for folding the protein chain or actions for assembling precursor chemicals/intermediates and the result to be achieved may include, e.g., folding the protein so that the protein is stable and so that it achieves a particular biological function or providing a valid synthetic route for the chemical. The agent is a mechanical agent that performs or controls the protein folding actions or chemical synthesis steps selected by the system automatically without human interaction. The observations may comprise direct or indirect observations of a state of the protein or chemical/ intermediates/ precursors.

In a similar way the environment may be a drug design environment such that each state is a respective state of a potential pharma chemical drug and the agent is a computer system for determining elements of the pharma chemical drug and/or a synthetic pathway for the pharma chemical drug. The drug/synthesis may be designed based on a reward derived from a target for the drug, for example in simulation. The agent is a mechanical agent that performs or controls synthesis of the drug.

The environment may be a simulated environment that is a simulation of a particular real-world environment. Generally in the case of a simulated environment the observations may include simulated versions of one or more of the previously described observations or types of observations and the actions may include simulated versions of one or more of the previously described actions or types of actions. For example the simulated environment may be a motion simulation environment, e.g., a driving simulation or a flight simulation, and the agent may be a simulated vehicle navigating through the motion simulation. In these implementations, the actions may be control inputs to control the simulated user or simulated vehicle.

When the simulated environment is a simulation of a particular real-world environment the system is used to select actions in the simulated environment during training or evaluation of the control neural network and, after training or evaluation or both are complete, is deployed for controlling a real-world agent in the real-world environment that is simulated by the simulated environment. This can avoid unnecessary wear and tear on and damage to the real-world environment or real-world agent and can allow the control neural network to be trained and evaluated on situations that occur rarely or are difficult to re-create in the real-world environment.

In some cases the system is partly trained using a simulation of a mechanical agent in a simulation of a real-world environment, and afterwards deployed to control the mechanical agent in the real-world environment that was the subject of the simulation. In such cases the observations of the simulated environment relate to the real-world environment, and the selected actions in the simulated environment relate to actions to be performed by the mechanical agent in the real-world environment.

.

.

.

Optionally, in any of the above implementations, the observation at any given time step may include data from a previous time step that may be beneficial in characterizing the environment, e.g., the action performed at the previous time step, the reward received at the previous time step, or both.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, .e.g., a TensorFlow framework, a PyTorch framework, a Microsoft Cognitive Toolkit framework, an Apache Singa framework, or an Apache MXNet framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should

**EP 4 268 135 B1**

be understood that the described program components and systems can generally be integrated together in a single software product or packaged into multiple software products.

**Claims**

1. A method of training a computer-implemented neural network system (100) used to control an agent (102) interacting with an environment (104) to perform a task, wherein the computer-implemented neural network system includes a synthetic return neural network system (130) and episodic memory (120), the method comprising, for each of a plurality of time steps:

   obtaining an observation characterizing a current state of the environment;
   processing the observation using the computer-implemented neural network system to generate an action selection output to select an action to be performed by the agent at the time step;
   storing, in the episodic memory, a latent representation (112) dependent on the current state of the environment;
   causing the agent to perform the selected action and, in response, receiving an actual reward characterizing a progress made in the environment as a result of the agent performing the selected action;
   processing the latent representation dependent on the current state of the environment using the synthetic return neural network system to generate a synthetic return (132) for the current state of the environment; and
   training, through reinforcement learning, the computer-implemented neural network system using at least the synthetic return for the current state of the environment; wherein

   i) the agent is a mechanical agent, the environment is a real-world environment, and the actions are actions taken by the mechanical agent in the real-world environment to perform the task; or the agent is a simulation of a mechanical agent, the environment is a simulation of a real-world environment, the actions are simulated actions taken by the simulated mechanical agent in the simulation of the real-world environment to perform the task, and wherein after the training the method is used to control the mechanical agent in the real-world environment to perform the task; or
   ii) the environment is a real-world manufacturing plant or service facility, the agent is an electronic agent controlling items of equipment in the manufacturing plant or service facility to perform the task; and

   further comprising training the synthetic return neural network system, using the actual reward and the latent representations stored in the episodic memory, to provide the synthetic return (132), wherein the synthetic return is dependent upon a learned association between the latent representation dependent on the current state of the environment and one or more stored latent representations dependent on previous states of the environment.

2. The method of claim 1 wherein the synthetic return neural network system comprises a contribution neural network ($c(\cdot)$) to process a latent representation dependent on a state of the environment to generate a reward contribution, and a trainable gating function ($g(\cdot)$) to process the latent representation dependent on the current state of the environment to provide a weight for weighting the reward contribution from the contribution neural network, the method further comprising:

   training the synthetic return neural network system by, for each of a plurality of latent representations dependent on previous states of the environment, stored in the episodic memory:
   providing the stored latent representation dependent on a previous state of the environment to the contribution neural network, to generate a reward contribution from the stored latent representation dependent on a previous state of the environment;
   providing the latent representation dependent on the current state of the environment to the trainable gating function to determine a weight for the previous states of the environment representing an association between the current state of the environment and the previous states of the environment;
   summing the reward contributions for each of the stored latent representations dependent on a previous state of the environment, each weighted by the respective weight from the trainable gating function, to determine an estimated reward; and
   training the contribution neural network and the trainable gating function to encourage the estimated reward to match the actual reward, wherein training the contribution neural network and the trainable gating function to encourage the estimated reward to match the actual reward comprises training the contribution neural network and the trainable gating function using an objective function dependent upon a difference between the estimated reward and the actual reward.

3.   The method of claim 2, wherein processing the latent representation dependent on the current state of the environment using the synthetic return neural network system to generate a synthetic return for the current state of the environment comprises:

processing the latent representation dependent on the current state of the environment using the contribution neural network to generate a reward contribution for the current state of the environment; and
using the reward contribution for the current state of the environment for the synthetic return.

4.   The method of claim 3 wherein generating the reward contribution for the current state of the environment is performed independently of knowledge of a future state of the environment after the current state.

5.   The method of any one of claims 2-4 wherein the synthetic return neural network system further comprises a baseline contribution neural network ($b(\cdot)$), the method further comprising:

processing the latent representation dependent on the current state of the environment using the baseline contribution neural network to generate a baseline reward contribution; and wherein
summing the reward contributions includes summing the baseline reward contribution.

6.   The method of any preceding claim wherein the computer-implemented neural network system comprises an action selection neural network system (110) to generate the action selection output and wherein the latent representation comprises a representation of a state of the action selection neural network system.

7.   The method of claim 6 wherein the action selection neural network system comprises a recurrent neural network, further comprising determining the latent representation from a hidden state of the recurrent neural network.

8.   The method of any preceding claim wherein training, through reinforcement learning, the computer-implemented neural network system using at least the synthetic return for the current state of the environment comprises:

forming a combined reward comprising a weighted combination of the actual reward and the synthetic return; and
training the computer-implemented neural network system using the combined reward.

9.   The method of any preceding claim wherein stored a latent representation of a state of the environment includes a latent representation of the action performed in the state of the environment; wherein the synthetic return neural network system, and when dependent upon claim 2 the contribution neural network, is configured to generate a synthetic return for actions of a set of possible actions in the current state of the environment; and wherein generating the synthetic return for the current state of the environment comprises generating the synthetic return for each of the possible actions in the current state of the environment for the reinforcement learning.

10.  The method of any preceding claim comprising training the computer-implemented neural network system using a temporal difference reinforcement learning technique.

11.  The method of claim 10 wherein training the computer-implemented neural network system using a temporal difference reinforcement learning technique comprises, for each of the time steps, training the computer-implemented neural network system using a temporal difference loss that comprises a difference between a state or state-action value output of the computer-implemented neural network system and an estimated return dependent upon at least the synthetic return.

12.  The method of any preceding claim comprising jointly training the computer-implemented neural network system and the synthetic return neural network system.

13.  The method of any preceding claim further comprising using the trained computer-implemented neural network system to select actions to be performed by the agent in the environment to perform the task.

14.  One or more computer-readable storage media storing instructions that when executed by one or more computers cause the one or more computers to perform the operations of the method of any of claims 1-13.

15.  A computer-implemented neural network system (100) for controlling an agent (102) interacting with an environment (104) to perform a task, the system comprising:

a synthetic return neural network system (130) configured to process a latent representation dependent on a state of the environment to generate a synthetic return; and

episodic memory (120) configured to store latent representations dependent on a state of the environment;

wherein the system is configured to, at each of a plurality of time steps:

obtain an observation characterizing a current state of the environment;
process the observation using the computer-implemented neural network system to generate an action selection output to select an action to be performed by the agent at the time step;
store, in the episodic memory, a latent representation (112) dependent on the current state of the environment;
cause the agent to perform the selected action and, in response, receive an actual reward characterizing a progress made in the environment as a result of the agent performing the selected action;
process the latent representation dependent on the current state of the environment using the synthetic return neural network system to generate a synthetic return for the current state of the environment; and
train, through reinforcement learning, the computer-implemented neural network system using at least the synthetic return for the current state of the environment; wherein

i) the agent is a mechanical agent, the environment is a real-world environment, and the actions are actions taken by the mechanical agent in the real-world environment to perform the task; or
ii) the environment is a real-world manufacturing plant or service facility, the agent is an electronic agent controlling items of equipment in the manufacturing plant or service facility to perform the task; and

wherein the system is further configured to, at each of the plurality of time steps, train the synthetic return neural network system, using the actual reward and the latent representations stored in the episodic memory, to provide the synthetic return (132), wherein the synthetic return associates the latent representation dependent on the current state of the environment and one or more stored latent representations dependent on previous states of the environment.

## Patentansprüche

1. Verfahren zum Trainieren eines computerimplementierten neuronalen Netzwerksystems (100), das verwendet wird, um einen Agenten (102) zu steuern, der mit einer Umgebung (104) interagiert, um eine Aufgabe durchzuführen, wobei das computerimplementierte neuronale Netzwerksystem ein neuronales Netzwerksystem für synthetische Rückgaben (130) und ein episodisches Gedächtnis (120) beinhaltet, wobei das Verfahren für jeden einer Vielzahl von Zeitschritten Folgendes umfasst:

Erhalten einer Beobachtung, die einen aktuellen Zustand der Umgebung kennzeichnet;
Verarbeiten der Beobachtung unter Verwendung des computerimplementierten neuronalen Netzwerksystems, um eine Handlungsauswahlausgabe zu erzeugen, um eine durch den Agenten in dem Zeitschritt durchzuführende Handlung auszuwählen;
Speichern einer latenten Darstellung (112) abhängig von dem aktuellen Zustand der Umgebung in dem episodischen Gedächtnis;
Veranlassen des Agenten, die ausgewählte Handlung durchzuführen, und als Reaktion darauf Empfangen einer aktuellen Belohnung, die einen in der Umgebung erzielten Fortschritt kennzeichnet, der sich aus dem Durchführen der ausgewählten Handlung durch den Agenten ergibt;
Verarbeiten der latenten Darstellung abhängig von dem aktuellen Zustand der Umgebung unter Verwendung des neuronalen Netzwerksystems für synthetische Rückgaben, um eine synthetische Rückgabe (132) für den aktuellen Zustand der Umgebung zu erzeugen; und
Trainieren des computerimplementierten neuronalen Netzwerksystems unter Verwendung von mindestens der synthetischen Rückgabe für den aktuellen Zustand der Umgebung mittels Verstärkungslernen; wobei

i) der Agent ein mechanischer Agent ist, die Umgebung eine reale Umgebung ist und die Handlungen Handlungen sind, die durch den mechanischen Agenten in der realen Umgebung zum Durchführen der Aufgabe ausgeführt werden; oder der Agent eine Simulation eines mechanischen Agenten ist, die Umgebung eine Simulation einer realen Umgebung ist, die Handlungen simulierte Handlungen sind, die der simulierte mechanische Agent in der Simulation der realen Umgebung ausführt, um die Aufgabe durchzuführen, und wobei nach dem Trainieren das Verfahren verwendet wird, um den mechanischen Agenten in der realen Umgebung zu steuern, um die Aufgabe durchzuführen; oder

ii) die Umgebung eine reale Produktionsstätte oder Serviceeinrichtung ist, es sich beim Agenten um einen elektronischen Agenten handelt, der Anlagen in der Produktionsstätte oder Serviceeinrichtung steuert, um die Aufgabe durchzuführen; und

ferner umfassend Trainieren des neuronalen Netzwerksystems für synthetische Rückgaben unter Verwendung der aktuellen Belohnung und der in dem episodischen Gedächtnis gespeicherten latenten Darstellungen, um die synthetische Rückgabe (132) bereitzustellen, wobei die synthetische Rückgabe von einer erlernten Assoziation zwischen der von dem aktuellen Zustand der Umgebung abhängigen latenten Darstellung und einer oder mehreren gespeicherten latenten Darstellungen abhängig ist, die von früheren Zuständen der Umgebung abhängig sind.

2. Verfahren nach Anspruch 1, wobei das neuronale Netzwerksystem für synthetische Rückgaben ein neuronales Beitragsnetzwerk ($c(\cdot)$) umfasst, um eine latente Darstellung abhängig von einem Zustand der Umgebung zu verarbeiten und den Belohnungsbeitrag zu erzeugen, und eine trainierbare Gating-Funktion ($g(\cdot)$), um die latente Darstellung abhängig von dem aktuellen Zustand der Umgebung zu verarbeiten und ein Gewicht zum Gewichten des Belohnungsbeitrags aus dem neuronalen Beitragsnetzwerk bereitzustellen, wobei das Verfahren ferner Folgendes umfasst:

Trainieren des neuronalen Netzwerksystems für synthetische Rückgaben für jede einer Vielzahl von latenten Darstellungen, die von früheren Zuständen der Umgebung abhängig sind und in dem episodischen Gedächtnis gespeichert sind, durch:

Bereitstellen der gespeicherten latenten Darstellung, die abhängig von einem früheren Zustand der Umgebung ist, an das neuronale Beitragsnetzwerk, um aus der gespeicherten latenten Darstellung, die abhängig von einem früheren Zustand der Umgebung ist, einen Belohnungsbeitrag zu erzeugen;

Bereitstellen der von dem aktuellen Zustand der Umgebung abhängigen latenten Darstellung für die trainierbare Gating-Funktion, um ein Gewicht für die früheren Zustände der Umgebung zu bestimmen, das eine Assoziation zwischen dem aktuellen Zustand der Umgebung und den früheren Zuständen der Umgebung darstellt;

Summieren der Belohnungsbeiträge für jede der gespeicherten latenten Darstellungen, die abhängig von einem früheren Zustand der Umgebung sind, wobei jeder Beitrag mit dem jeweiligen Gewicht aus der trainierbaren Gating-Funktion gewichtet wird, um eine geschätzte Belohnung zu bestimmen; und

Trainieren des neuronalen Beitragsnetzwerks und der trainierbaren Gating-Funktion, um zu erreichen, dass die geschätzte Belohnung mit der aktuellen Belohnung übereinstimmt, wobei das Trainieren des neuronalen Beitragsnetzwerks und der trainierbaren Gating-Funktion, um zu erreichen, dass die geschätzte Belohnung mit der aktuellen Belohnung übereinstimmt, das Trainieren des neuronalen Beitragsnetzwerks und der trainierbaren Gating-Funktion unter Verwendung einer Zielfunktion umfasst, die von einer Differenz zwischen der geschätzten Belohnung und der aktuellen Belohnung abhängt.

3. Verfahren nach Anspruch 2, wobei das Verarbeiten der latenten Darstellung abhängig von dem aktuellen Zustand der Umgebung unter Verwendung des neuronalen Netzwerksystems für synthetische Rückgaben, um eine synthetische Rückgabe für den aktuellen Zustand der Umgebung zu erzeugen, Folgendes umfasst:

Verarbeiten der latenten Darstellung abhängig von dem aktuellen Zustand der Umgebung unter Verwendung des neuronalen Beitragsnetzwerks, um einen Belohnungsbeitrag für den aktuellen Zustand der Umgebung zu erzeugen; und

Verwenden des Belohnungsbeitrags für den aktuellen Zustand der Umgebung für die synthetische Rückgabe.

4. Verfahren nach Anspruch 3, wobei das Erzeugen des Belohnungsbeitrags für den aktuellen Zustand der Umgebung unabhängig von der Kenntnis eines zukünftigen Zustands der Umgebung nach dem aktuellen Zustand durchgeführt wird.

5. Verfahren nach einem der Ansprüche 2 bis 4, wobei das neuronale Netzwerksystem für synthetische Rückgaben ferner ein neuronales Basis-Beitragsnetzwerk ($b(\cdot)$) umfasst, wobei das Verfahren ferner Folgendes umfasst:

Verarbeiten der latenten Darstellung abhängig von dem aktuellen Zustand der Umgebung unter Verwendung des neuronalen Basis-Beitragsnetzwerks, um einen Basis-Belohnungsbeitrag zu erzeugen; und wobei Summieren der Belohnungsbeiträge Summieren des Basis-Belohnungsbeitrags beinhaltet.

**6.** Verfahren nach einem der vorhergehenden Ansprüche, wobei das computerimplementierte neuronale Netzwerksystem ein neuronales Netzwerksystem zur Handlungsauswahl (110) umfasst, um die Handlungsauswahlausgabe zu erzeugen, und wobei die latente Darstellung eine Darstellung eines Zustands des neuronalen Netzwerksystems zur Handlungsauswahl umfasst.

**7.** Verfahren nach Anspruch 6, wobei das neuronale Netzwerksystem zur Handlungsauswahl ein rekurrentes neuronales Netzwerk umfasst, ferner umfassend Bestimmen der latenten Darstellung aus einem verborgenen Zustand des rekurrenten neuronalen Netzwerks.

**8.** Verfahren nach einem der vorhergehenden Ansprüche, wobei das Trainieren des computerimplementierten neuronalen Netzwerksystems unter Verwendung von mindestens der synthetischen Rückgabe für den aktuellen Zustand der Umgebung mittels Verstärkungslernen Folgendes umfasst:

Bilden einer kombinierten Belohnung, die eine gewichtete Kombination aus der aktuellen Belohnung und der synthetischen Rückgabe umfasst; und
Trainieren des computerimplementierten neuronalen Netzwerksystems unter Verwendung der kombinierten Belohnung.

**9.** Verfahren nach einem der vorhergehenden Ansprüche, wobei eine gespeicherte latente Darstellung eines Zustands der Umgebung eine latente Darstellung der in dem Zustand der Umgebung durchgeführten Handlung beinhaltet; wobei das neuronale Netzwerksystem für synthetische Rückgaben, und, sofern abhängig von Anspruch 2, das neuronale Beitragsnetzwerk konfiguriert ist, um eine synthetische Rückgabe für Handlungen einer Menge möglicher Handlungen in dem aktuellen Zustand der Umgebung zu erzeugen; und wobei Erzeugen der synthetischen Rückgabe für den aktuellen Zustand der Umgebung Erzeugen der synthetischen Rückgabe für jede der möglichen Handlungen in dem aktuellen Zustand der Umgebung für das Verstärkungslernen umfasst.

**10.** Verfahren nach einem der vorhergehenden Ansprüche, umfassend Trainieren des computerimplementierten neuronalen Netzwerksystems unter Verwendung einer zeitlichen Differenz-Verstärkungslerntechnik.

**11.** Verfahren nach Anspruch 10, wobei Trainieren des computerimplementierten neuronalen Netzwerksystems unter Verwendung einer zeitlichen Differenz-Verstärkungslerntechnik für jeden der Zeitschritte Trainieren des computerimplementierten neuronalen Netzwerksystems unter Verwendung eines zeitlichen Differenzverlusts umfasst, der eine Differenz zwischen einer Zustands- oder Zustandshandlungs-Wertausgabe des computerimplementierten neuronalen Netzwerksystems und einer geschätzten Rückgabe umfasst, die von mindestens der synthetischen Rückgabe abhängt.

**12.** Verfahren nach einem der vorhergehenden Ansprüche, umfassend gemeinsames Trainieren des computerimplementierten neuronalen Netzwerksystems und des neuronalen Netzwerksystems für synthetische Rückgaben.

**13.** Verfahren nach einem der vorhergehenden Ansprüche, ferner umfassend Verwenden des trainierten computerimplementierten neuronalen Netzwerksystems, um Handlungen auszuwählen, die der Agent in der Umgebung durchführen soll, um die Aufgabe durchzuführen.

**14.** Ein oder mehrere computerlesbare Speichermedien, die Anweisungen speichern, die, wenn sie durch einen oder mehrere Computer ausgeführt werden, den einen oder die mehreren Computer veranlassen, die Vorgänge des Verfahrens nach einem der Ansprüche 1 bis 13 durchzuführen.

**15.** Computerimplementiertes neuronales Netzwerksystem (100) zum Steuern eines Agenten (102), der mit einer Umgebung (104) interagiert, um eine Aufgabe durchzuführen, wobei das System Folgendes umfasst:

ein neuronales Netzwerksystem für synthetische Rückgaben (130), das konfiguriert ist, um eine latente Darstellung, die von einem Zustand der Umgebung abhängig ist, zu verarbeiten und eine synthetische Rückgabe zu erzeugen; und
episodisches Gedächtnis (120), das konfiguriert ist, um latente Darstellungen zu speichern, die von einem Zustand der Umgebung abhängig sind;
wobei das System bei jedem einer Vielzahl von Zeitschritten konfiguriert ist zum:

Erhalten einer Beobachtung, die einen aktuellen Zustand der Umgebung kennzeichnet;

Verarbeiten der Beobachtung unter Verwendung des computerimplementierten neuronalen Netzwerksystems, um eine Handlungsauswahlausgabe zu erzeugen, um eine durch den Agenten in dem Zeitschritt durchzuführende Handlung auszuwählen;

Speichern einer latenten Darstellung (112) abhängig von dem aktuellen Zustand der Umgebung in dem episodischen Gedächtnis;

Veranlassen des Agenten, die ausgewählte Handlung durchzuführen, und als Reaktion darauf Empfangen einer aktuellen Belohnung, die einen in der Umgebung erzielten Fortschritt kennzeichnet, der sich aus dem Durchführen der ausgewählten Handlung durch den Agenten ergibt;

Verarbeiten der latenten Darstellung abhängig von dem aktuellen Zustand der Umgebung unter Verwendung des neuronalen Netzwerksystems für synthetische Rückgaben, um eine synthetische Rückgabe für den aktuellen Zustand der Umgebung zu erzeugen; und

Trainieren des computerimplementierten neuronalen Netzwerksystems unter Verwendung von mindestens der synthetischen Rückgabe für den aktuellen Zustand der Umgebung mittels Verstärkungslernen; wobei

i) der Agent ein mechanischer Agent ist, die Umgebung eine reale Umgebung darstellt und die Handlungen Handlungen sind, die der mechanische Agent in der realen Umgebung durchführt, um die Aufgabe durchzuführen; oder

ii) die Umgebung eine reale Produktionsstätte oder Serviceeinrichtung ist, es sich beim Agenten um einen elektronischen Agenten handelt, der Anlagen in der Produktionsstätte oder Serviceeinrichtung steuert, um die Aufgabe durchzuführen; und

wobei das System ferner konfiguriert ist, um in jedem der Vielzahl von Zeitschritten das neuronale Netzwerksystem für synthetische Rückgaben unter Verwendung der aktuellen Belohnung und der in dem episodischen Gedächtnis gespeicherten latenten Darstellungen zu trainieren, um die synthetische Rückgabe (132) bereitzustellen, wobei die synthetische Rückgabe die von dem aktuellen Zustand der Umgebung abhängige latente Darstellung und eine oder mehrere gespeicherte latente Darstellungen, die von früheren Zuständen der Umgebung abhängig sind, assoziiert.

**Revendications**

1. Procédé d'entraînement d'un système de réseau neuronal mis en œuvre par ordinateur (100) utilisé pour commander un agent (102) interagissant avec un environnement (104) pour réaliser une tâche, dans lequel le système de réseau neuronal mis en œuvre par ordinateur comporte un système de réseau neuronal à retour synthétique (130) et une mémoire épisodique (120), le procédé comprenant, pour chacune d'une pluralité d'étapes temporelles :

l'obtention d'une observation caractérisant un état actuel de l'environnement ;

le traitement de l'observation à l'aide du système de réseau neuronal mis en œuvre par ordinateur pour générer une sortie de sélection d'action pour sélectionner une action destinée à être réalisée par l'agent à l'étape temporelle ;

le stockage, dans la mémoire épisodique, d'une représentation latente (112) dépendant de l'état actuel de l'environnement ;

le fait d'amener l'agent à réaliser l'action sélectionnée et, en réponse, la réception d'une récompense réelle caractérisant un progrès effectué dans l'environnement à la suite de la réalisation, par l'agent, de l'action sélectionnée ;

le traitement de la représentation latente dépendant de l'état actuel de l'environnement à l'aide du système de réseau neuronal à retour synthétique pour générer un retour synthétique (132) pour l'état actuel de l'environnement ; et

l'entraînement, par apprentissage par renforcement, du système de réseau neuronal mis en œuvre par ordinateur à l'aide au moins du retour synthétique pour l'état actuel de l'environnement ;

dans lequel

i) l'agent est un agent mécanique, l'environnement est un environnement du monde réel et les actions sont des actions entreprises par l'agent mécanique dans l'environnement du monde réel pour réaliser la tâche ; ou l'agent est une simulation d'un agent mécanique, l'environnement est une simulation d'un environnement du monde réel, les actions sont des actions simulées entreprises par l'agent mécanique simulé dans la simulation de l'environnement du monde réel pour réaliser la tâche, et dans lequel, après l'entraînement, le procédé est utilisé pour commander l'agent mécanique dans l'environnement du monde réel pour réaliser la tâche ; ou

ii) l'environnement est une usine de fabrication ou une installation de service du monde réel, l'agent est un agent électronique commandant des éléments d'équipement dans l'usine de fabrication ou l'installation de service pour réaliser la tâche ; et

comprenant en outre l'entraînement du système de réseau neuronal à retour synthétique, à l'aide de la récompense réelle et des représentations latentes stockées dans la mémoire épisodique, pour fournir le retour synthétique (132), dans lequel le retour synthétique dépend d'une association apprise entre la représentation latente dépendant de l'état actuel de l'environnement et une ou plusieurs représentations latentes stockées dépendant des états précédents de l'environnement.

2. Procédé selon la revendication 1, dans lequel le système de réseau neuronal à retour synthétique comprend un réseau neuronal à contribution ($c(\cdot)$) pour traiter une représentation latente dépendant d'un état de l'environnement pour générer une contribution de récompense, et une fonction de déclenchement entraînable ($g(\cdot)$) pour traiter la représentation latente dépendant de l'état actuel de l'environnement pour fournir un poids destiné à pondérer la contribution de récompense provenant du réseau neuronal à contribution, le procédé comprenant en outre :
l'entraînement du système de réseau neuronal à retour synthétique en, pour chacune d'une pluralité de représentations latentes dépendant des états précédents de l'environnement, stockées dans la mémoire épisodique :

fournissant la représentation latente stockée dépendant d'un état précédent de l'environnement au réseau neuronal à contribution, pour générer une contribution de récompense à partir de la représentation latente stockée dépendant d'un état précédent de l'environnement ;
fournissant la représentation latente dépendant de l'état actuel de l'environnement à la fonction de déclenchement entraînable pour déterminer un poids pour les états précédents de l'environnement représentant une association entre l'état actuel de l'environnement et les états précédents de l'environnement ;
additionnant les contributions de récompense pour chacune des représentations latentes stockées dépendant d'un état précédent de l'environnement, chacune pondérée par le poids respectif de la fonction de déclenchement entraînable, pour déterminer une récompense estimée ; et
l'entraînement du réseau neuronal à contribution et de la fonction de déclenchement entraînable pour encourager la récompense estimée à correspondre à la récompense réelle, dans lequel l'entraînement du réseau neuronal à contribution et de la fonction de déclenchement entraînable pour encourager la récompense estimée à correspondre à la récompense réelle comprend l'entraînement du réseau neuronal à contribution et de la fonction de déclenchement entraînable à l'aide d'une fonction objectif dépendant d'une différence entre la récompense estimée et la récompense réelle.

3. Procédé selon la revendication 2, dans lequel le traitement de la représentation latente dépendant de l'état actuel de l'environnement à l'aide du système de réseau neuronal à retour synthétique pour générer un retour synthétique pour l'état actuel de l'environnement comprend :

le traitement de la représentation latente dépendant de l'état actuel de l'environnement à l'aide du système de réseau neuronal à contribution pour générer une contribution de récompense pour l'état actuel de l'environnement ; et
l'utilisation de la contribution de récompense pour l'état actuel de l'environnement pour le retour synthétique.

4. Procédé selon la revendication 3, dans lequel la génération de la contribution de récompense pour l'état actuel de l'environnement est réalisée indépendamment de la connaissance d'un état futur de l'environnement après l'état actuel.

5. Procédé selon l'une quelconque des revendications 2 à 4, dans lequel le système de réseau neuronal à retour synthétique comprend en outre un réseau neuronal à contribution de base ($b(\cdot)$), le procédé comprenant en outre :

le traitement de la représentation latente dépendant de l'état actuel de l'environnement à l'aide du réseau neuronal à contribution de base pour générer une contribution de récompense de base ; et dans lequel l'addition des contributions de récompense comporte l'addition de la contribution de récompense de base.

6. Procédé selon une quelconque revendication précédente dans lequel le système de réseau neuronal mis en œuvre par ordinateur comprend un système de réseau neuronal à sélection d'action (110) pour générer la sortie de sélection d'action et dans lequel la représentation latente comprend une représentation d'un état du système de réseau neuronal à sélection d'action.

7. Procédé selon la revendication 6, dans lequel le système de réseau neuronal à sélection d'action comprend un réseau neuronal récurrent, comprenant en outre la détermination de la représentation latente à partir d'un état caché du réseau neuronal récurrent.

8. Procédé selon une quelconque revendication précédente dans lequel l'entraînement, par apprentissage par renforcement, du système de réseau neuronal mis en œuvre par ordinateur à l'aide au moins du retour synthétique pour l'état actuel de l'environnement comprend :

la formation d'une récompense combinée comprenant une combinaison pondérée de la récompense réelle et du retour synthétique ; et
l'entraînement du système de réseau neuronal mis en œuvre par ordinateur à l'aide de la récompense combinée.

9. Procédé selon une quelconque revendication précédente, dans lequel une représentation latente stockée d'un état de l'environnement comporte une représentation latente de l'action réalisée dans l'état de l'environnement ; dans lequel le système de réseau neuronal à retour synthétique, et lorsqu'il dépend de la revendication 2, le réseau neuronal à contribution, est configuré pour générer un retour synthétique pour des actions d'un ensemble d'actions possibles dans l'état actuel de l'environnement ; et dans lequel la génération du retour synthétique pour l'état actuel de l'environnement comprend la génération du retour synthétique pour chacune des actions possibles dans l'état actuel de l'environnement pour l'apprentissage par renforcement.

10. Procédé selon une quelconque revendication précédente, comprenant l'entraînement du système de réseau neuronal mis en œuvre par ordinateur à l'aide d'une technique d'apprentissage par renforcement de différence temporelle.

11. Procédé selon la revendication 10, dans lequel l'entraînement du système de réseau neuronal mis en œuvre par ordinateur à l'aide d'une technique d'apprentissage par renforcement de différence temporelle comprend, pour chacune des étapes temporelles, l'entraînement du système de réseau neuronal mis en œuvre par ordinateur à l'aide d'une perte de différence temporelle qui comprend une différence entre une sortie de valeur d'état ou d'état-action du système de réseau neuronal mis en œuvre par ordinateur et un retour estimé dépendant au moins du retour synthétique.

12. Procédé selon une quelconque revendication précédente, comprenant l'entraînement conjoint du système de réseau neuronal mis en œuvre par ordinateur et du système de réseau neuronal à retour synthétique.

13. Procédé selon une quelconque revendication précédente, comprenant en outre l'utilisation du système de réseau neuronal mis en œuvre par ordinateur entraîné pour sélectionner les actions destinées à être réalisées par l'agent dans l'environnement pour réaliser la tâche.

14. Un ou plusieurs supports de stockage lisibles par ordinateur stockant des instructions qui, lorsqu'elles sont exécutées par un ou plusieurs ordinateurs, amènent les un ou plusieurs ordinateurs à réaliser les opérations du procédé selon l'une quelconque des revendications 1 à 13.

15. Système de réseau neuronal mis en œuvre par ordinateur (100) destiné à commander un agent (102) interagissant avec un environnement (104) pour réaliser une tâche, le système comprenant :

un système de réseau neuronal à retour synthétique (130) configuré pour traiter une représentation latente dépendant d'un état de l'environnement pour générer un retour synthétique ; et
une mémoire épisodique (120) configurée pour stocker des représentations latentes dépendant d'un état de l'environnement ;
dans lequel le système est configuré pour, à chacune d'une pluralité d'étapes temporelles :

obtenir une observation caractérisant un état actuel de l'environnement ;
traiter l'observation à l'aide du système de réseau neuronal mis en œuvre par ordinateur pour générer une sortie de sélection d'action pour sélectionner une action destinée à être réalisée par l'agent à l'étape temporelle ;
stocker, dans la mémoire épisodique, une représentation latente (112) dépendant de l'état actuel de l'environnement ;

amener l'agent à réaliser l'action sélectionnée et, en réponse, recevoir une récompense réelle caractérisant un progrès effectué dans l'environnement à la suite de la réalisation, par l'agent, de l'action sélectionnée ;

traiter la représentation latente dépendant de l'état actuel de l'environnement à l'aide du système de réseau neuronal à retour synthétique pour générer un retour synthétique pour l'état actuel de l'environnement ; et

entraîner, par apprentissage par renforcement, le système de réseau neuronal mis en œuvre par ordinateur à l'aide au moins du retour synthétique pour l'état actuel de l'environnement ;

dans lequel

i) l'agent est un agent mécanique, l'environnement est un environnement du monde réel et les actions sont des actions entreprises par l'agent mécanique dans l'environnement du monde réel pour réaliser la tâche ; ou

ii) l'environnement est une usine de fabrication ou une installation de service du monde réel, l'agent est un agent électronique commandant des éléments d'équipement dans l'usine de fabrication ou l'installation de service pour réaliser la tâche ; et

dans lequel le système est en outre configuré pour, à chacune de la pluralité d'étapes temporelles, entraîner le système de réseau neuronal à retour synthétique, à l'aide de la récompense réelle et des représentations latentes stockées dans la mémoire épisodique, pour fournir le retour synthétique (132), dans lequel le retour synthétique associe la représentation latente dépendant de l'état actuel de l'environnement et une ou plusieurs représentations latentes stockées dépendant des états précédents de l'environnement.

FIG. 1

REINFORCEMENT LEARNING NEURAL
NETWORK SYSTEM 100

| ACTOR COMPUTING UNIT 200 | ACTOR COMPUTING UNIT 200 | – – – – – | ACTOR COMPUTING UNIT 200 |

EXPERIENCE DATA;
STATE REPRESENTATIONS

PARAMETER
VALUES

| LEARNER COMPUTING UNIT 210 | LEARNER COMPUTING UNIT 210 | – – – – – | LEARNER COMPUTING UNIT 210 |

## FIG. 2

FIG. 3

```
┌─────────────────────────────────────┐
│      OBTAIN OBSERVATION OF THE       │
│           ENVIRONMENT                │
└─────────────────────────────────────┘
                   │
                   ▼                 404
┌─────────────────────────────────────┐
│ USE OBSERVATION TO SELECT ACTION TO BE│
│      PERFORMED BY THE AGENT          │
└─────────────────────────────────────┘
                   │
                   ▼                 406
┌─────────────────────────────────────┐
│  STORE STATE REPRESENTATION FOR THE  │
│    OBSERVATION IN EPISODIC MEMORY    │
└─────────────────────────────────────┘
                   │
                   ▼                 408
┌─────────────────────────────────────┐
│       PROCESS CURRENT STATE          │
│ REPRESENTATION USING TRAINABLE GATING│
│             FUNCTION                 │
└─────────────────────────────────────┘
                   │
                   ▼                 410
┌─────────────────────────────────────┐
│  PROCESS PAST STATE REPRESENTATIONS  │
│ USING CONTRIBUTION NEURAL NETWORK TO │
│     OBTAIN REWARD CONTRIIBUTIONS     │
└─────────────────────────────────────┘
                   │
                   ▼                 412
┌─────────────────────────────────────┐
│ DETERMINE ESTIMATED REWARD FROM SUM  │
│ OF REWARD CONTRIBUTIONS WEIGHTED BY  │
│           GATING FUNCTION            │
└─────────────────────────────────────┘
                   │
                   ▼                 414
┌─────────────────────────────────────┐
│ TRAIN CONTRIBUTION NEURAL NETWORK AND│
│ TRAINABLE GATING FUNCTION TO ENCOURAGE│
│ ESTIMATED REWARD TO MATCH ACTUAL REWARD│
└─────────────────────────────────────┘
                   │
                   ▼                 416
┌─────────────────────────────────────┐
│ PROCESS CURRENT STATE REPRESENTATION │
│ USING CONTRIBUTION NEURAL NETWORK TO │
│      GENERATE SYNTHETIC RETURN       │
└─────────────────────────────────────┘
                   │
                   ▼                 418
┌─────────────────────────────────────┐
│ TRAIN REINFORCEMENT LEARNING NEURAL  │
│ NETWORK SYSTEM USING THE SYNTHETIC   │
│             RETURN                   │
└─────────────────────────────────────┘
```

# FIG. 4

FIG. 5A

FIG. 5B

FIG. 5C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020175364 A